# EUROPEAN PATENT APPLICATION

(11) **EP 2 211 418 A1**
(43) Date of publication of application: **28.07.2010**
(21) Application number: 08845155.4
(22) Date of filing: 30.10.2008
(51) Int. Cl.: H01M 14/00, H01L 31/04, H01M 2/22

(54) **DYE-SENSITIZED SOLAR CELL MODULE**

(30) Priority: 02.11.2007 JP 2007285657
(71) Applicant: Nippon Kayaku Kabushiki Kaisha, Tokyo 102-8172 (JP)
(72) Inventor: HOSHI, Takayuki, Tokyo 115-8588 (JP); INOUE, Teruhisa, Tokyo 115-8588 (JP); MAENOSONO, Akira, Tokyo 115-8588 (JP); KAWABE, Kazuyuki, Tokyo 115-8588 (JP); SHIGAKI, Koichiro, Tokyo 115-8588 (JP); HAMADA, Masahiro, Tokyo 115-8588 (JP)
(74) Representative: Gille Hrabal Struck Neidlein Prop Roos
(86) International application number: PCT/JP2008/069780
(87) International publication number: WO 2009/057704

(57) **Abstract**

A dye-sensitized solar cell module comprising dye-sensitized solar cells arranged on a flat surface. Each dye-sensitized solar cell comprises a first substrate on which a first conductive layer having a photoelectric conversion layer forming part and an extension part is provided, a second substrate as the counter electrode on which a second conductive layer having a photoelectric conversion layer provided on the photoelectric conversion layer forming part on the first conductive layer is provided, a charge transfer layer contact part and an extension part, a third conductive layer provided on the extension part of the first and/or the extension part of the second conductive layer, a partition wall separating the dye-sensitized solar cell from an adjacent dye-sensitized solar cell, and a charge transfer layer. Part or whole of the partition wall contains conductive particles having conductive layers on their surfaces. The conductive layers of the conductive particles, the first conductive layer extension part of a dye-sensitized solar cell, and the second conductive layer extension part of the adjacent dye-sensitized solar cell are electrically connected in series via the third conductive layer provided on the extension part of the first conductive layer and/or the extension part of the second conductive layer.

## Description

### TECHNICAL FIELD

The present invention relates to a solar cell module having dye-sensitized photoelectric conversion elements useful as a solar battery. More specifically, the present invention relates to a dye-sensitized solar cell module in which a plurality of dye-sensitized solar cells having dye-sensitized photoelectric conversion elements are two-dimensionally arranged and electrically connected in series and which has a large area and is excellent in performance as a solar battery.

### BACKGROUND ART

A solar battery which is attracting attention as a clean energy source has come to be used for general residences in recent years, but it has not yet come to spread widely. Examples of the reason include that a module must be enlarged since it is hard to say that performance of a solar cell itself is excellent; productivity in module production is low; and as a result, a solar battery itself is expensive.

Although there are several types of solar cells, most of the solar cells that are put in practical use are silicon solar cells. A liquid junction solar cell using a dye-sensitized photoelectric conversion element recently has attracted attention, and research has been made aiming at practical use thereof. The liquid junction solar cell using a dye-sensitized photoelectric conversion element itself has been studied for many years, and the basic structure generally consists of a semiconductor such as a metal oxide (forming one of the electrodes), a dye adsorbed thereto, an electrolytic solution, and a counter electrode. Among these, although various types of dyes and electrolytic solutions have been studied, the research on a semiconductor has been limited to the development of the type thereof and the like. Specifically, in the early liquid junction solar cell, a single crystal of a semiconductor, for example, titanium oxide, (TiO₂), zinc oxide (ZnO), cadmium sulfide (CdS), or tin oxide (SnO₂) has been used as one of the electrodes. However, since such a single crystal electrode has a small adsorption ability of dyes, it had a disadvantage that its conversion efficiency from light to electricity was very low to thereby increase cost. The method proposed to improve the above disadvantage is a method using a high surface area semiconductor prepared by sintering particulates to provide many pores as an electrode. Tsubomura et al. have reported that the electrode using such a porous zinc oxide to which an organic dye is adsorbed has very high performance (JP 2664194, Patent Document 1).

Afterward, a new type of photoelectric (solar) cell using a photoelectric conversion element was developed by Graetzel (Switzerland) et al. in 1991. This is also referred to as a Graetzel cell, which comprises a thin film substrate of oxide semiconductor particulates provided on a transparent conductive substrate, the thin film being sensitized by a dye and serving as one of the electrodes, a substrate provided so as to face the thin film substrate, on which a reducing agent such as platinum is applied and which serves as a counter electrode, and a charge transfer layer (electrolyte solution containing a redox substance) sandwiched between these substrates. For example, performance close to a silicon solar cell has been realized by adsorbing a ruthenium complex dye on an electrode of porous titanium oxide particulates (Non-Patent Document 1).
In this new type of solar cell, when a photoelectric conversion layer using oxide semiconductor particulates is irradiated with light, electrons will be generated, and the electrons move to the counter electrode through an external electric circuit. Subsequently, the electrons moved to the counter electrode are carried with the electrolyte in the charge transfer layer provided between the two electrodes and return to the photoelectric conversion layer. Electric energy is taken out by repetition of such electron transfer.

In such a dye-sensitized solar cell, if the area of a single dye-sensitized solar cell is increased, the electric current generated will theoretically be increased in proportion to the area regardless of whether the cell is a conventional type or a new type. However, for example, the dye-sensitized solar cell described in Patent Document 1 has a basic structure in which an electrolytic solution (electrolyte solution) is injected between two glass substrates to prepare a dye-sensitized solar cell. When such a structure is employed, it may be possible to manufacture a dye-sensitized solar cell having a small area, but it is difficult to manufacture a dye-sensitized solar cell having a large area, for example, an area of 30 cm to 1 m square. This is because a voltage drop in an in-plane direction of the transparent conductive layer used for an electrode part disadvantageously increases with an increase in the area of a dye-sensitized solar cell, which in turn increases the internal series resistance as a solar cell to thereby reduce the fill factor and short-circuit current in the current-voltage characteristics at the time of photoelectric conversion, resulting in reduction in the photoelectric conversion efficiency.

As a method for solving such a problem, there is considered an integrated structure in which a first conductive layer of a unit cell is brought into contact with a second conductive layer of an adjacent unit cell, the structure being employed in a module of an amorphous-silicon solar cell and the like. However, a dye-sensitized solar cell generally has a more complicated structure than an amorphous-silicon solar cell, because it has layers such as a porous semiconductor layer and a charge transfer layer. In addition, iodine frequently used as an electrolyte in the charge transfer layer is corrosive. Therefore, a technique of increasing the area employed in the amorphous-silicon solar cell cannot be applied to the dye-sensitized solar cell as it is.

Therefore, several module structures for increasing the area unique to a dye-sensitized solar cell have been announced.
For example, JP 2001-035789 A (Patent Document 2) discloses several techniques such as an electrical connection method in which a plurality of cells insulated with a sealer (sealing material) are provided between two supports and adjacent cells are electrically connected by a metal paste layer provided in the sealer; an electrical connection method by a conductive material obtained by mixing metal particulates with an insulating polymer material; and an electrical connection method by an anisotropic conductive member in which a metallic fiber surface is coated with polymer.

Next, JP 2002-535808 A (Patent Document 3) discloses, as an electrical connection method between adjacent cells, a structure in which a metal wire having a coating film is arranged between conductive layers on two glass substrates. Here, when pressure is applied to the glass substrates, the metal wire between the conductive layers is compressed to tear the coating film to bring the metal wire into electrical contact with the conductive layers.

Further, JP 2002-540559 A (Patent Document 4) describes an electrical connection method between adjacent cells by a conductive material in which conductive particles are contained in a polymer matrix.

PATENT DOCUMENT 1: JP 2664194
PATENT DOCUMENT 2: JP 2001-035789 A
PATENT DOCUMENT 3: JP 2002-535808 A
PATENT DOCUMENT 4: JP 2002-540559 A
NON-PATENT DOCUMENT 1: M.K. Nazeeruddin et al., J. Am. Chem. Soc. 115 (1993) 6382

### DISCLOSURE OF THE INVENTION

### PROBLEMS TO BE SOLVED BY THE INVENTION

Patent Document 2 discloses an electrical connection method in which two sealers spaced apart with a predetermined clearance are provided on one of the substrates and a metal paste is applied to the clearance. However, since the sealer used in this method has a relatively large width as described in Example 1, there is a problem that the area which does not contribute to power generation is large, and improvement in module performance is difficult. Further, in the electrical connection method using a conductive material obtained by mixing metal particulates with an insulating polymer material, contact resistance is large because the conductive material is particulate, and the loss of electric current may be large when opposing substrates are electrically connected. Furthermore, Patent Document 2 describes that the distance between module substrates is determined by applying a solution in which particulates are dispersed, but this method may mechanically damage a power generation part due to the scattering of the particulates into cells. Furthermore, if this method is applied to a large area substrate, for example, having a 30 cm square, the ununiformity of particulate distribution may occur and the nonuniformity of the distance between the substrates may arise. Note that, in a dye-sensitized solar cell, it is known that photoelectric conversion efficiency will be reduced if the thickness of a charge transport layer is increased by a predetermined level or more compared with the diffusion constant of an electrolyte, and thus if a part is present in which the space is unexpectedly enlarged, the performance of the whole module will be reduced.

On the other hand, in the module described in Patent Document 3, the contact area between the metal wire and the conductive layer is small and the loss of electric current is high, which may cause reduction in module efficiency. Further, in this method, when the pressure at the time of bonding substrates is partly below the pressure required for tearing the coating film formed on the metal wire, the space between the substrates may be uneven. Further, since the metal wire in this method freely moves in the transverse direction (substrate face direction) at the time of bonding, the wire may move with the in-plane ununiformity of the pressure. This may cause the space between the substrates to be uneven, and the electrical connection between adjacent cells may be unstable.

In the modules in which a plurality of dye-sensitized solar cells are arranged between two substates described in Patent Documents 2 to 4, the electrolyte contained in the charge transfer layer and the photoelectric conversion layer is desired not to move between the respective adjacent cells. When the electrolyte solution moves between the cells adjacent to each other, it is impossible to maintain the electric potential difference between the respective cells to significantly reduce the performance as a solar battery.

An object of the present invention is to provide a dye-sensitized solar cell module in which a plurality of dye-sensitized solar cells is two-dimensionally arranged in series between opposing substrates, wherein it is possible to hold a uniform space between the substrates; the electrolyte in each dye-sensitized solar cell is positively prevented from moving to the adjacent cell part; and the electrical connection between the adjacent cells is well and stably performed, and to provide a solar battery using the same.

### MEANS FOR SOLVING THE PROBLEMS

As a result of extensive investigation to solve the above problems, the present inventors have found that the above problems can be solved by providing a conductive layer on each of the opposing substrates, providing a third conductive layer on one or both of the conductive layers, arranging dye-sensitized solar cells in series via these layers, allowing conductive particulates to be contained in a partition wall, and electrically connecting these conductive layers, and the present invention has been completed by these findings.

Specifically, the present invention is a dye-sensitized solar cell module as described below:
(1) A dye-sensitized solar cell module in which a plurality of dye-sensitized solar cells is two-dimensionally arranged, each of the dye-sensitized solar cells comprising: a first substrate provided with a first conductive layer consisting of a photoelectric conversion layer-installing part and an extension part, a photoelectric conversion layer provided on the photoelectric conversion layer-installing part on the first conductive layer, a second substrate as a counter electrode provided with a second conductive layer consisting of a charge transfer layer contact part and an extension part, a third conductive layer provided on the extension part of the first conductive layer and/or the second conductive layer, a partition wall to partition adjacent dye-sensitized solar cells, and a charge transfer layer, wherein some or all of the partition walls are a partition wall containing conductive particulates each having a conductive layer on a surface thereof, and the conductive layer of the conductive particulates is electrically connected in series with the extension part of the first conductive layer of a dye-sensitized solar cell and the extension part of the second conductive layer of an adjacent dye-sensitized solar cell via the third conductive layer provided on the extension part of the first conductive layer and/or on the extension part of the second conductive layer.
(2) The dye-sensitized solar cell module according to (1), wherein the third conductive layer is provided only on the extension part of the first conductive layer.
(3) The dye-sensitized solar cell module according to (1), wherein the third conductive layer is provided only on the extension part of the second conductive layer.
(4) The dye-sensitized solar cell module according to (1), wherein the third conductive layer is provided on both the extension parts of the first conductive layer and the second conductive layer.
(5) The dye-sensitized solar cell module according to any one of (1) to (4), wherein the third conductive layer is a metal layer or a metal containing layer having smaller electric resistance than the first conductive layer and the second conductive layer.
(6) The dye-sensitized solar cell module according to any one of (1) to (5), wherein the conductive particulates in the partition wall are each a spherical resin particulate which is deformable with pressure applied to the first substrate and the second substrate when these substrates are bonded together and has a conductive metal plated on a surface thereof.
(7) The dye-sensitized solar cell module according to any one of (1) to (6), wherein the third conductive layer is a metal layer or a metal containing layer which is softer than the conductive particulates in the partition wall.
(8) The dye-sensitized solar cell module according to any one of (1) to (7), wherein a material for providing a partition wall (sealing material) is an adhesive resin in which the conductive particulates are dispersed.
(9) The dye-sensitized solar cell module according to any one of (1) to (8), wherein space distance L₀ between the first conductive layer and the second conductive layer is from 5 to 200 µm.

### ADVANTAGES OF THE INVENTION

The dye-sensitized solar cell module of the present invention employing the above-described constitution has the following features:
(1) The conductive particulates in the partition wall can control the space between the substrates opposing to each other (cell gap) and can provide more reliable electric connection between the first conductive layer and the second conductive layer.
(2) Electricity is easily accumulated in the third conductive layer, which allows electricity to be efficiently removed.
(3) It is possible to use a resin composition curable by heat or light as a material for a partition (sealing material), which allows a dye-sensitized solar cell module to be prepared efficiently.
(4) The strength of a dye-sensitized solar cell module itself is increased, and in addition, movement of the electrolyte between the adjacent dye-sensitized solar cells can be positively prevented.
Use of the dye-sensitized solar cell module of the present invention having these features allows simple manufacture of a dye-sensitized solar battery having excellent performance.

### BEST MODE FOR CARRYING OUT THE INVENTION

The present invention will be described in detail below.
The dye-sensitized solar cell module of the present invention comprises, as essential components, two opposing substrates, conductive layers provided on the substrates and each having an extension part, a photoelectric conversion layer provided on one of the conductive layers and sensitized with a dye, a charge transfer layer, a third conductive layer provided on one or both of the extension parts, and a partition wall for connecting the two substrates. These components will be successively described below.

A first substrate among the two substrates arranged opposite to each other (hereinafter, simply referred to as "first substrate") is not particularly limited as long as it is a stable inorganic or organic film or sheet-shaped molded product such as glass and a plastic film. However, it needs to have sufficient transmittance to the absorption wavelength of a dye for sensitization (hereinafter, simply referred to as "sensitizing dye") which is adsorbed to the semiconductor-containing layer to be laminated thereon. The transmittance is generally 50% or more, preferably 70% or more, of the average transmittance in the absorption wavelength region of the sensitizing dye. The thickness of the first substrate may be selected in consideration of the strength and the like of the material in the range which does not reduce the transmittance, and it is in the range of generally from 0.01 to 5.0 mm, preferably from 0.1 to 5.0 mm, more preferably from 0.5 to 5.0 mm, most preferably from 0.5 to 2.0 mm. Preferred materials include glass and a polyester film.

The other substrate among the two substrates arranged opposite to each other (hereinafter, simply referred to as "second substrate") is, similar to the above first substrate, also not particularly limited as long as it is a stable inorganic or organic film or sheet-shaped molded product such as glass and a plastic film. However, the second substrate needs not necessarily be transparent, but it is also possible to use a colored or opaque substrate.

Next, the first conductive layer provided on the first substrate (hereinafter, simply referred to as "first conductive layer") will be described. The first conductive layer needs to be a transparent conductive layer, and a thin film of a conductive substance typified by, for example, FTO (fluorine-doped tin oxide), ATO (antimony-doped tin oxide), and ITO (indium-doped tin oxide) is generally used. The transmittance of the whole substrate on which the first conductive layer is formed is generally 50% or more, preferably 70% or more of the average transmittance in the visible light region. The film thickness of the first conductive layer may be selected in the range that does not reduce the transmittance of the light in the visible light region, and it is generally in the range of from about 10 to 200 µm. In addition, the surface resistance is generally 1000 Ω/cm₂ or less, preferably 100 Ω/cm₂ or less.

The methods for forming the transparent conductive layer which is the first conductive layer include a vapor deposition process (there are two type: Physical Vapor Deposition: PVD and Chemical Vapor Deposition: CVD), a wet process such as electroless plating, and a solution coating process.

The substrate on which such a conductive layer is provided is available also as a commercial item, and it is also possible to use it as it is. Examples of the substrate with a conductive layer that can be used for the dye-sensitized solar cell module of the present invention include FTO glass, ITO glass, ZnO glass, and ATO glass.
Note that, in the present specification, the first conductive layer is classified into two parts, a photoelectric conversion layer-installing part and an extension part. These represent specific parts on the single first conductive layer. The photoelectric conversion layer-installing part as described herein represents a part of the first conductive layer on which a photoelectric conversion layer is provided. The extension part represents a part other than the photoelectric conversion layer-installing part of the first conductive layer, and on the extension part a partition wall to be described below is provided or a lead wire is connected.
The first conductive layer is provided so that the extension part thereof faces the extension part of the second conductive layer (to be described below) of a battery cell adjacent thereto. The width of the extension part is in the range of generally from 1 µm to 5 mm, preferably from 10 µm to 2 mm, further preferably from 100 µm to 1 mm. With respect to the relation between the size (minor-axis width) of the extension part of the first conductive layer and that of the semiconductor-containing layer of the first conductive layer to be described below, the ratio L6/L5 is 1 or more, preferably 5 or more, further preferably 10 or more, most preferably 20 or more, wherein L5 represents the length of the minor-axis width of the extension part, and L6 represents the length of the minor-axis width of the semiconductor-containing layer.

Next, the second conductive layer provided on the second substrate (hereinafter, simply referred to as "second conductive layer") will be described. The second conductive layer needs not necessarily be transparent, but any material can be used without particular limitation as long as it is an electric conductor. However, a metal such as Pt, Ti, and W and a metal oxide which is the material for the first conductive layer are preferably used in terms of electric conductivity or corrosion resistance to an electrolyte, and Pt is particularly preferred. Note that, when a conductive material other than Pt is used, it is preferred to form a layer that catalytically acts on the reduction reaction of a redox electrolyte (to be described below) (for example, a thin film of Pt, carbon, or the like) on the surface of the conductive material. The film thickness of the second conductive layer is generally in the range of from about 5 Å to 10 µm.

As a method for forming the second conductive layer, any method may be used as long as it is a method for generally forming an electrode, such as a vapor deposition process, an electroless plating process, an electrodeposition process, and a printing process. The substrate on which such a conductive layer is provided is available also as a commercial item, and it is also possible to use it as it is. Examples of the commercial item of the substrate having a conductive layer that can be used for forming the second conductive layer include those as described above.

Note that, in the present specification, the second conductive layer is classified into two parts, a charge transfer layer contact part and an extension part. These represent specific parts on the single second conductive layer. The charge transfer layer contact part as described herein represents a part of the second conductive layer in which the upper part thereof is brought into contact with the charge transfer layer in the solar cell manufactured by a method to be described below. The extension part represents a part other than the charge transfer layer contact part of the second conductive layer, and on the extension part a partition wall to be describe below is provided or a lead wire is connected.
The second conductive layer is provided so that the extension part thereof faces the extension part of the above-described first conductive layer of a battery cell adjacent thereto. The width of the extension part is in the range of generally from 1 µm to 5 mm, preferably from 10 µm to 2 mm, further preferably from 100 µm to 1 mm.

Next, a photoelectric conversion layer will be described, which is prepared by providing a semiconductor-containing layer on the first conductive layer and then allowing a sensitizing dye to be adsorbed on the semiconductor-containing layer.

Particulates of an oxide semiconductor are preferably used as a component of the semiconductor-containing layer. Specific examples of the oxide semiconductor include titanium oxide, zinc oxide, tin oxide, indium oxide, and a composite oxide of titanium oxide and another oxide (for example, a composite oxide of titanium oxide and a metal). Preferred examples of a metal that forms a composite with titanium oxide include Zr, Mg, Ca, Nb, V, Zn, Sn, W, Mo, Fe, Ge, and In. Particulates of these oxide semiconductor have an average particle size in the range of generally from 1 to 500 nm, preferably from 1 to 100 nm. The particulates of these oxide semiconductors may be a mixture of particulates having a large particle size with those having a small particle size or may be used in a multilayered structure.

The semiconductor-containing layer is provided on the photoelectric conversion layer-installing part of the first conductive layer. The methods for providing the semiconductor-containing layer on the first conductive layer include the following: a method of forming a thin film of oxide semiconductor particulates directly on a conductive layer by spraying or the like; a method of electrically forming oxide semiconductor particles as a thin film; a method of electrically depositing oxide semiconductor particles on a thin film; and a method of coating, on a conductive layer, a slurry of oxide semiconductor particles or a paste containing particulates obtained by hydrolyzing a precursor of oxide semiconductor particulates such as a semiconductor alkoxide, followed by drying, curing, or firing. This oxide semiconductor-containing layer will be a part of one of the electrodes, and a preparation method using a slurry is preferred from the nature of the electrode. In this method, the slurry is prepared by dispersing a secondary aggregate of the oxide semiconductor particulates in a dispersion medium by a conventional method so that the particulates have an average particle size in the range of from 1 to 200 nm.

The dispersion medium for dispersing the slurry is not particularly limited as long as it can disperse the oxide semiconductor particulates.
Examples of the dispersion medium that can be used include water, alcohols such as ethanol and terpineol, ketones such as acetone and acetylacetone, and hydrocarbons such as hexane. These may be used in combination. Particularly, use of water is preferred in terms of reducing the viscosity change of slurry.
In addition, a dispersion stabilizer may be used in combination in the slurry in order to stabilize the dispersion state of the oxide semiconductor particulates. Examples of the dispersion stabilizer that can be used include acids such as acetic acid, hydrochloric acid, nitric acid, and acrylic acid, and organic solvents such as acetylacetone, polyethylene glycol, and polyvinyl alcohol.

The substrate on which the slurry is applied may be fired. The firing temperature is generally 100°C or higher, preferably 200°C or higher, and the upper limit is approximately the melting point (softening temperature) of a substrate, that is, generally 900°C or lower, preferably 600°C or lower. The firing time is not particularly limited, but about 4 hours or less is preferred. The thin film of oxide semiconductor particulates on the first conductive layer has a thickness in the range of generally from 1 to 200 µm, preferably from 3 to 50 µm, most preferably from 5 to 30 µm.

The thin film of the oxide semiconductor particulates may be subjected to secondary treatment. For example, it is also possible to improve the performance of the thin film of oxide semiconductor particulates by directly immersing the whole substrate on which the thin film of oxide semiconductor particulates is provided into a solution of an alkoxide, a metal alkoxide, a chloride, a nitrate, a sulfide, an acetate, or the like of the same metal as that of the oxide semiconductor, followed by drying or re-firing. The metal alkoxide includes titanium ethoxide, titanium isopropoxide, and titanium-t-butoxide, and the metal alkoxide includes n-dibutyl-diacetyltin. These are used as an alcohol solution thereof . Examples of the chloride include titanium tetrachloride, tin tetrachloride, and zinc chloride, and examples of the acetate include magnesium acetate, calcium acetate, and zinc acetate. These are used as an aqueous solution thereof.
The oxide semiconductor thin film obtained in this way is composed of the particulates of an oxide semiconductor.

A dye for sensitization (hereinafter, simply referred to as "sensitizing dye") is adsorbed (also referred to as "carried") on the semiconductor-containing layer prepared in this way to obtain a photoelectric conversion layer having a function of absorbing light energy and converting it into electric energy. A metal complex dye, a non-metallic organic dye, and the like are used as the sensitizing dye, but the sensitizing dye is not particularly limited as long as it is a substance that is sensitized by the light absorbed in conjunction with the oxide semiconductor particulates. The sensitizing dye may be used singly or in combination of two or more thereof. When the sensitizing dyes are used in combination, both the dyes may be organic sensitizing dyes, or an organic sensitizing dye may be mixed with a metal complex dye. Particularly, a wide absorption wavelength can be used by mixing sensitizing dyes having different absorption wavelengths, thereby obtaining a photoelectric conversion layer with high conversion efficiency. Examples of the metal complex dye that can be used include a ruthenium complex, phthalocyanine, and porphyrin. Examples of the organic dye include metal-free phthalocyanine and porphyrin, methine dyes such as cyanine, merocyanine, oxonol, a triphenylmethane dye, and an acrylic acid dye, xanthene dyes, azo dyes, anthraquinone dyes, and perylene dyes. Preferred examples include a ruthenium complex and methine dyes such as merocyanine and acrylic acid dyes as described above. Examples of dyes that can be used for the solar cell module of the present invention will be given below.

Examples of methine dyes include the dyes described in WO 2002-011213, WO 2004-082061, PCT/JP 2007/053885, JP 2002-334729 A, JP 2003-007358 A, JP 2003-017146 A, JP 2003-059547 A, JP 2003-086257 A, JP 2003-115333 A, JP 2003-132965 A, JP 2003-142172 A, JP 2003-151649 A, JP 2003-157915 A, JP 2003-282165 A, JP 2004-014175 A, JP 2004-022222 A, JP 2004-022387 A, JP 2004-227825 A, JP 2005-005026 A, JP 2005-019130 A, JP 2005-135656 A, JP 2006-079898 A, JP 2006-134649 A, JP 11-086916 A, JP 11-163378 A, JP 11-167937 A, JP 11-214730 A, JP 11-214731 A, JP 2000-106224 A, JP 2000-223167 A, JP 2000-228233 A, JP 2000-251958 A, JP 2000-277180 A, JP 2000-285978 A, JP 2000-294303 A, JP 2000-294305 A, JP 2001-006761 A, JP 2001-024253 A, JP 2001-043906 A, JP 2001-052766 A, JP 2001-067931 A, JP 2001-076773 A, JP 2001-076775 A, JP 2001-229984 A, JP 2002-042907 A, JP 2002-042908 A, JP 2002-050779 A, JP 2002-100420 A, JP 2002-164089 A, JP 2002-231325 A, JP 2002-343455 A, JP 2002-352871 A, JP 2003-007359 A, JP 2003-007360 A, JP 2003-017145 A, JP 2003-059547 A, JP 2003-078152 A, JP 2003-115333 A, JP 2003-132965 A, JP 2003-142172 A, JP 2003-147329 A, JP 2003-151649 A, JP 2003-157915 A, JP 2003-197281 A, JP 2003-203684 A, JP 2003-234133 A, JP 2003-249274 A, JP 2003-327948 A, JP 2003-346925 A, JP 2004-139755 A, JP 2003-249275 A, JP 2003-264010 A, JP 2003-282165 A, JP 2004-143355 A, JP 2004-152854 A, JP 2004-171969 A, JP 2004-200068 A, JP 2004-207224 A, JP 2004-220974 A, JP 2004-234953 A, JP 2004-235052 A, JP 2004-247158 A, JP 2004-253333 A, JP 2004-269695 A, JP 2004-292742 A, JP 2004-292743 A, JP 2004-292744 A, JP 2004-296170 A, JP 2004-319202 A, JP 2004-319309 A, JP 2005-005026 A, JP 2005-011800 A, JP 2005-019124 A, JP 2005-019249 A, JP 2005-019250 A, JP 2005-019251 A, JP 2005-0192520 A, JP 2005-019253 A, JP 2005-019756 A, JP 2005-026030 A, JP 2005-026114 A, JP 2005-026115 A, JP 2005-026116 A, JP 2005-032475 A, JP 2005-056650 A, JP 2005-056697 A, JP 2005-078887 A, JP 2005-078888 A, JP 2005-078995 A, JP 2005-085643 A, JP 2005-123013 A, JP 2005-123033 A, JP 2005-126586 A, JP 2005-129329 A, JP 2005-129429 A, JP 2005-129430 A, JP 2005-132914 A, JP 2005-135656 A, JP 2005-209359 A, JP 2005-209682 A, JP 2005-264025 A, JP 2001-052766 A, etc.

Further, examples of metal complex dyes include the complex dyes described in JP 2000-026487 A, JP 2000-268889 A, JP 2000-268890 A, JP 2001-006760 A, JP 2001-039995 A, JP 2001-059062 A, JP 2001-060467 A, JP 2001-060468 A, JP 2001-203005 A, JP 2001-226607 A, JP 2001-229983 A, JP 2001-236999 A, JP 2001-237000 A, JP 2001-247546 A, JP 2001-247546 A, JP 2001-253894 A, JP 2001-291534 A, JP 2002-025636 A, JP 2002-093473 A, JP 2002-093474 A, JP 2002-100417 A, JP 2002-105346 A, JP 2002-176188 A, JP 2002-193935 A, JP 2002-241634 A, JP 2003-003083 A, JP 2003-051343 A, JP 2003-051344 A, JP 2003-212851 A, JP 2003-261536 A, JP 2003-272721 A, JP 2003-288953 A, JP 2001-253894 A, JP 2004-176072 A, JP 2000-268890 A, JP 2005-120042 A, JP 2005-222941 A, JP 2005-222942, A, JP 2005-255992 A, JP 2001-039995 A, JP 2001-247546 A, JP 2664194 B, JP 3731752 B, JP 3783872 B, JP 3849005 B, JP 8-15097 B, US 5350644, etc.

Furthermore, examples of the dyes other than the above methine dyes and metal complex dyes include the dyes described in JP 9-199744 A, JP 10-051049 A, JP 10-093118 A, JP 10-093121 A, JP 10-189065 A, JP 10-334954 A, JP 10-340742 A, JP 11-049773 A, JP 11-097725 A, JP 11-204821 A, JP 10-093118 A, JP 2000-082506 A, JP 2000-100482 A, JP 2000-100483 A, JP 2000-195570 A, JP 2000-243463 A, JP 2000-251956 A, JP 2000-251957 A, JP 2000-285976 A, JP 2001-093589 A, JP 2001-203006 A, JP 2002-042909 A, JP 2002-047290 A, JP 2002-063949 A, JP 2002-100419 A, JP 2002-184476 A, JP 2002-270865 A, JP 2002-334729 A, JP 1999-049773 A, JP 2003-007358 A, JP 2003-017146 A, JP 2003-031273 A, JP 2003-086257 A, JP 2003-123863 A, JP 2003-152208 A, JP 2003-346926 A, JP 1998-340742 A, JP 2002-0639497 A, JP 2004-143463 A, JP 2004-363096 A, JP 2002-047290 A, JP 2005-085659 A, JP 2004-143463 A, etc.

As a method for allowing a dye to be carried, there is mentioned a method of immersing the first substrate on which the above semiconductor-containing layer is provided in a solution obtained by dissolving the sensitizing dye in a solvent as described below or in a dispersion obtained by dispersing a dye having low solubility. The immersion temperature is in the range of from around ordinary temperature to the boiling point of the used solvent, and the immersion time is generally in the range of from 1 to 48 hours.

Examples of the solvent that can be used for dissolving the sensitizing dye include methanol, ethanol, acetonitrile, dimethylsulfoxide, dimethylformamide, tetrahydrofuran, acetone, water, and t-butanol. The concentration of the sensitizing dye in any of the above solvents is generally in the range of from 1 × 10⁻⁶ to 1 M, preferably from 1 × 10⁻⁵ to 1 × 10⁻¹ M.

The ratio of sensitizing dyes when these sensitizing dyes are used as a mixture is not particularly limited, and the optimum conditions are selected depending on the respective sensitizing dyes. However, it is generally preferred that the ratio of any one sensitizing dye to the other sensitizing dye in the mixture is from 50:50 to about 10:90 by mole. When sensitizing dyes are supported on the semiconductor-containing layer using a solution in which two or more sensitizing dyes are dissolved or dispersed, the total concentration of the sensitizing dyes in the solution may be the same as the above-described sensitizing dye concentration. The solvents as described above can be used as the solvent in the case where sensitizing dyes are used as a mixture, and the solvent for each sensitizing dye to be used may be the same or different. The ratio of solvents when two or more solvents are used as a mixture is not particularly limited, and it can be arbitrarily set in consideration of the solubility of a sensitizing dye, photoelectric transfer characteristics, durability of a solar battery, and the like. Further, in the case of multistage supporting in which two or more solvents are successively used, the type and ratio of the solvents can be arbitrarily selected and set. When a sensitizing dye is supported on a semiconductor-containing layer, it is effective to support the sensitizing dye in the presence of a clathrate compound in order to prevent association of the sensitizing dyes. Here, examples of the clathrate compound include a steroid compound such as cholic acid, deoxycholic acid, chenodeoxycholic acid, methyl cholate, sodium cholate, and ursodeoxycholic acid, crown ether, cyclodextrin, calyx allene, and polyethylene oxide. Preferred examples include cholic acids such as cholic acid, deoxycholic acid, chenodeoxycholic acid, methyl cholate, sodium cholate, and ursodeoxycholic acid and polyethylene oxide. As a using form of these clathrate compounds, it is possible to add them to a sensitizing dye solution or to previously dissolve them in a solvent followed by dissolving a sensitizing dye therein. Note that two or more of the above clathrate compounds can be used in combination, and the ratio can be selected arbitrarily.

Further, after the sensitizing dye is supported, the surface of the semiconductor-containing layer may be treated with an amine compound such as 4-t-butyl pyridine. The method of treatment includes a method of immersing the substrate, on which the semiconductor-containing layer supporting the sensitizing dye is provided, in an ethanol solution of the amine compound. The immersion temperature is generally 25°C, and the immersion time is in the range of generally from 1 to 72 hours, preferably from 2 to 48 hours.

In the present invention, the first substrate, on which the semiconductor-containing layer sensitized with a sensitizing dye (photoelectric conversion layer) is placed in this way, has a function of one of the electrodes as a semiconductor electrode.

Next, there will be described a charge transfer layer formed in contact with the photoelectric conversion layer and having a role to reduce an oxidant of the dye. The charge transfer layer comprises a redox electrolyte, a hole transporting material, or a p-type semiconductor, and the like, and the form thereof includes a liquid, a solidified body (a gel and gel-like), and a solid. A liquid charge transfer layer that can be used includes one in which a redox electrolyte, a molten salt, a hole transporting material, a p-type semiconductor, or the like is dissolved in a solvent, respectively, and an ambient temperature molten salt. A charge transfer layer of a solidified body (a gel and gel-like) that can be used includes one in which the above liquid-form charge transfer layer is contained in a polymer matrix, a low-molecular gelling agent, or the like. A solid charge transfer layer that can be used includes a redox electrolyte, a molten salt, a hole transporting material, and a p-type semiconductor.

Examples of the redox electrolyte include a halogen redox electrolyte comprising a halogen compound having a halogen ion as a counter ion and a halogen molecule, a metal redox electrolyte comprising a metal complex such as a ferrocyanide-ferricyanide, a ferrocene-ferricinium ion, a cobalt complex, and a blue copper complex described in JP 2006-302849 A, and an organic redox electrolyte such as alkylthiol-alkyldisulfide, a viologen dye, and hydroquinone-quinone. A halogen redox electrolyte is preferred. Examples of the halogen molecule in the halogen redox electrolyte comprising a halogen compound-a halogen molecule include an iodine molecule and a bromine molecule, and an iodine molecule is preferred.
Further, examples of the halogen compound having a halogen ion as a counter ion include metal halides such as LiBr, NaBr, KBr, LiI, NaI, KI, CsI, CaI₂, MgI₂, and CuI, and organic quaternary ammonium salts of halogen such as tetraalkylammonium iodide, imidazolium iodide, and pyridinium iodide. The salts having an iodine ion as a counter ion are preferred. It is also preferred to use an electrolyte having an imide ion such as a bis(trifluoromethanesulfonyl) imide ion and a dicyanoimide ion as a counter ion other than the above iodine ion. The concentration of the redox electrolyte in the total amount of the charge transfer layer is in the range of generally from about 0.01 to 99% by mass, preferably from about 0.1 to 90% by mass.

Examples of the hole transporting material include an amine derivative, a conductive polymer such as polyacetylene, poly aniline, polythiophene, polyphenylenevinylene, and polyfluorenevinylene, and a compound used for the discotic liquid crystal phase such as a triphenylene compound. Further, examples of the p-type semiconductor include CuI and CuSCN.

When the charge transfer layer comprises a liquid containing a redox electrolyte, a hole transporting material, or a p-type semiconductor, or the like, an electrochemically inert solvent is used as the solvent therefor. Examples of the solvent include acetonitrile, propylene carbonate, ethylene carbonate, 3-methoxypropionitrile, methoxyacetonitrile, ethylene glycol, propylene glycol, diethylene glycol, triethylene glycol, γ-butyrolactone, dimethoxyethane, diethyl ether, diethyl carbonate, dimethyl carbonate, 1,2-dimethoxyethane, dimethylformamide, dimethyl sulfoxide, 1,3-dioxolane, methyl formate, 2-methyltetrahydrofuran, 3-methyl-oxazolidine-2-one, sulfolane, tetrahydrofuran, and water. Among them, acetonitrile, propylene carbonate, ethylene carbonate, 3-methoxypropionitrile, methoxyacetonitrile, ethylene glycol, 3-methyl-oxazolidine-2-one, and γ-butyrolactone are particularly preferred. These may be used singly or in combination of two or more thereof. When they are used in combination, the ratio may be arbitrarily selected.

Next, there will be described a third conductive layer provided on the extension part of the first conductive layer and/or on the extension part of the second conductive layer of an adjacent battery cell (hereinafter, simply referred to as "third conductive layer").
The third conductive layer is a band of metal layer or metal-containing layer having a predetermined thickness. A metal having low electric resistance is preferred as a metallic material that constitutes the third conductive layer. The third conductive layer preferably has a lower electric resistance than the first conductive layer and the second conductive layer for the reason of reducing a collecting effect and contact resistance. The metal used is suitably selected so that these conditions may be satisfied. Specific examples of the metal that can be used include Ag, Cu, Ti, Ni, Au, Pt, and W. The third conductive layer can be prepared, for example, by applying a paste containing these metal particulates on the extension part of the first conductive layer and/or the second conductive layer, followed by treatment such as drying. It is also possible to use a non-metallic material such as graphite and a conducive organic material as the third conductive layer.

The above-described paste may be prepared each time the paste is used, or a commercial item may be used as it is as the paste. As a coating method, methods such as screen printing and coating by a dispenser can be employed. The paste is generally prepared by mixing metal particulates having a particle size of from 10 to 100 µm with a medium such as a thermoplastic resin followed by stirring. Specific examples of the commercial item that can be used include Dotite (trade name, manufactured by Fujikura Kasei Co., Ltd.), Everyohm and Varniphite (trade names, manufactured by Nippon Graphite Industries, Ltd.), and Lion Paste (trade name, manufactured by Lion Corporation). These pastes can also be used in combination of two or more thereof, and when two or more are mixed, the ratio can be selected arbitrarily.

In order to provide more reliable contact between the third conductive layer and conductive particulates (to be described below) in a partition wall, the third conductive layer is preferably a layer which is rich in elasticity and softer than the conductive particulates (to be described below) in a partition wall.

Next, the partition wall has a predetermined thickness and is provided for the purpose of partitioning each photoelectric conversion layer and charge transfer layer of a solar cell module which is a conductive structure. The partition wall is also provided for adhering and optionally electrically connecting the substrates opposing to each other. A sealing material is generally used for providing the partition wall. The sealing material comprises a material for adhesion and optionally conductive particulates for imparting conductivity to the partition wall (hereinafter, simply referred to as "conductive particulate"). The material for adhesion constituting the sealing material is not particularly limited as long as it is a material that can disperse conductive particulates therein and can achieve the above objects after bonding together the substrates opposing to each other. Specific examples of the material for adhesion that can be used include sealing materials prepared by using, as main components, an epoxy resin, an epoxy (meth)acrylate resin, a silicone resin, a polyisobutylene resin, a crosslinking agent, a polymerization initiator, and the like. Among them, an epoxy resin, an epoxy (meth)acrylate resin, and a polyisobutylene resin are preferred. Examples of commercially available sealing materials include 31X-101 (trade name, manufactured by ThreeBond Co., Ltd.) and KAYATORON ML-3600P5E (trade name, manufactured by Nippon Kayaku Co., Ltd.).

As a conductive particulate, there is generally used one in which a thin film layer of a conductive metal (conductive layer) is formed on the surface of a non-metallic material (core material) having no electrical conductivity. Specific examples of the core material that can be used include organic materials such as a natural resin, a thermoplastic resin such as polyethylene, polypropylene, polyvinyl chloride, polystyrene, polyamide, polyacrylate, polyacrylonitrile, an ionomer, and polyester, a phenol resin, an epoxy resin, a urea resin, a benzoguanamine resin, a melamine resin, a xylene resin, a silicone resin, and a diallyl phthalate resin; and inorganic materials such as glass, ceramics, silica, a metal oxide, a metal silicate, a metal carbide, a metal nitride, a metal carbonate, a metal sulfate, a metal phosphate, a metal sulfide, and a metal halide.

Among these, a resin material is preferably used as the core material of conductive particulates for the purpose of increasing the area of the extension part on the first substrate (the first conductive layer or the third conductive layer provided on the first conductive layer) and the extension part on the second substrate (the second conductive layer or the third conductive layer provided on the second conductive layer) in contact with the conductive particulates. When a resin material is used as the core material, the contact area is increased because the section of the whole conductive particulate viewed from the horizontal direction relative to the substrate is deformed from a circle to an ellipse by the pressure (to be described below) that the substrate receives when the first substrate and the second substrate are bonded together. In addition, the electric contact reliability of the first conductive layer and/or the second conductive layer with the third conductive layer is improved by the restoring force caused by the change from an ellipse to a circle.

The conductive metal used for plating the surface of the particulates as a core material is preferably a metal having small electric resistance, and specifically Ni and Au are used. The film is formed by a known method such as electroless plating. The conductive particulate can be deformed to the extent that the minor axis of the section is generally from 50 to 95%, preferably from 60 to 90%, most preferably from 70 to 80% relative to the major axis thereof. The conductive particulate having such performance is commercially available, and examples of the available conductive particulate include Micro Pearl AU (trade name, manufactured by Sekisui Chemical Co., Ltd.) and Bright (trade name, manufactured by Nippon Chemical Industrial Co., Ltd.). Further, the conductive particulate can be used in combination of two or more thereof, and when two or more are used in combination, the ratio can be selected arbitrarily.

The content of the conductive particulates contained in the sealing material is in the range of generally from 1 to 50% by mass, preferably from 2 to 40% by mass, most preferably from 5 to 30% by mass. Further, the particle size of the conductive particulates is in the range of from 1 to 100 µm, preferably from 10 to 80 µm, further preferably from 15 to 80 µm, most preferably from 20 to 40 µm. Furthermore, these particulates have a certain, particle size distribution in many cases, and the particulates outside the ranges as described above are not necessarily eliminated.

To the sealing material are optionally added other components such as a tackifier, a flame retardant, a filler, a colorant, a solvent, a thixotropy imparting agent, an oxidation stabilizer, a light stabilizer, a lubricant, and other various resins.
The sealing material for preparing the partition wall is prepared by mixing the conductive particulates with a material for adhesion such as a commercial sealing material, followed by stirring.

The sealing material containing the conductive particulates is applied to the extension part (to the third conductive layer in the case of a layer on which the third conductive layer is provided) of either one or both of the first conductive layer and the second conductive layer of an adjacent cell and the periphery thereof. Then, both the substrates are stacked and pressed in a heated or non-heated state to cure them by heating or by UV irradiation to bond the first substrate and the second substrate resulting in the formation of a partition wall. At this time, the space between the first substrate and the second substrate is mainly determined by the particle size of the conductive particulates used for the sealing material, a core material of these particulates, pressing pressure, and the like. As a coating method of the sealing material used as a partition wall, a known method in itself such as screen printing and coating by a dispenser can be employed.
Note that when a metal easily corroded by a substance used in the charge transfer layer is used for the third conductive layer, it is preferable to provide a partition wall so that the third conductive layer is completely covered therewith.

As described above, in order to provide more reliable contact between the third conductive layer and the conductive particulates, the third conductive layer is preferably softer than the conductive particulates forming the partition wall. When the third conductive layer is softer than the conductive particulates, the conductive particulates may enter the third conductive layer by the pressure applied to the first substrate and the second substrate when these substrates are bonded together.

When the conductive particulates in the partition wall enter the third conductive layer, the thickness of the third conductive layer is from about 5 to 50% of the particle size of the conductive particulates. When the third conductive layers are provided on both the first conductive layer and the second conductive layer, respective third conductive layers may be in contact with each other.

Further, when the third conductive layer is softer than the conductive particulates and the conductive particulates are softer than the first substrate and the second substrate, the conductive particulates enter the third conductive layer but do not enter the first substrate and the second substrate by the pressure applied to the first substrate and the second substrate when these substrates are bonded together. Therefore, the space between the first substrate and the second substrate depends only on the particle size of the conductive particulates, and the space between the substrates can be controlled without being influenced by the film thickness of the third conductive layer. Specifically, the space between the first substrate and the second substrate can be kept constant by controlling the pressure applied to the substrates when they are bonded together, in consideration of the restoring force of the conductive particulates. The pressure applied to the substrates when they are bonded together is in the range of generally from 0.01 to 10 MPa, preferably from 0.1 to 0.5 MPa. The space distance L₀ between the first conductive layer and the second conductive layer is in the range of generally from 1 to 200 µm, preferably from 5 to 200 µm, more preferably from 10 to 80 µm, most preferably from. 20 to 40 µm.

A comparison of softness of the conductive particulates with that of the first substrate and the second substrate or the third conductive layer can be easily performed by observing, with a microscope or the like, whether the particulates have entered the substrates or the conductive layer, after applying the pressure to the conductive particulates which are spread on the first substrate and the second substrate or on the third conductive layer. Alternatively, the softness of the first substrate and the second substrate, the third conductive layer, and the core material of the conductive particulates can be compared by determining the respective hardness from the results of measurement by the universal hardness test method (Fischerscope H100 (trade name), manufactured by Fischer Instruments K.K.).

Note that the conductive particulates are not in contact with the charge transfer layer and at least in contact with the third conductive layer, but need not necessarily be in contact with the second conductive layer. Further, the relative hardness of the third conductive layer to the hardness of the conductive particulates is not particularly limited. For example, when the conductive particulates are harder than the third conductive layer, the former may be in the state where it is buried in the latter. Conversely, when the third conductive layer is harder than the conductive particulates, the third conductive layer may be in the state where it is in contact with the conductive particulates.

The dye-sensitized solar cell module of the present invention is manufactured using the materials as described above generally through the following steps:
(1) providing a first conductive layer and a second conductive layer on a first substrate and a second substrate, respectively;
(2) providing a semiconductor particulate layer on a photoelectric conversion layer installing-part on the first conducive layer;
(3) providing a third conductive layer on an extension part of both or one of the first conductive layer and the second conductive layer;
(4) allowing the semiconductor particulate layer to support a sensitizing dye to obtain a photoelectric conversion layer;
(5) applying a sealing material to the first substrate and/or the second substrate (wherein a sealing material containing conductive particulates is used at least on the conductive layer of the extension part requiring electric connection between the first substrate and the second substrate);
(6) adhering both the substrates; and
(7) injecting an electrolyte solution from an inlet and then sealing the inlet.

The dye-sensitized solar cell module of the present invention can be suitably applied to a manufacturing method different from the above steps (for example, a process described in WO 2007-046499 A).

The dye-sensitized solar cell module of the present invention can be used as a dye-sensitized solar battery by connecting a lead wire to the first conductive layer (- electrode) at the end of the module and a lead wire to the second conductive layer (+ electrode) at the end of the module and connecting these lead wires with a load.

A method of the present invention, comprising newly providing a conductive layer to an opposing conductive layer and connecting both the conductive layers so that they are electrically connected by a partition wall containing conductive particulates, is preferably used for connecting solar battery elements (cells) in a dye-sensitized solar cell module like in the present invention. Note that, a method for arranging components in the module of the present invention can also be applied to a series- and a parallel-type dye-sensitized module described in JP 3683899, US 2003-0140959 A, and JP 2005-528750 A by replacing conductive particulates in a connecting part with insulating particulates to provide a role of a spacer that allows positive and negative electrodes (the second conductive layer and the first conductive layer in the present invention) to face to each other with a certain space.

The solar cell module of the present invention is obtained by connecting the first substrate and the second substrate of a plurality of solar cells in the module in series. Therefore, according to the design of the module, both a partition wall which electrically connects the first substrate and the second substrate and a partition wall which does not do so may be required.
In order to electrically connect the first substrate and the second substrate by a partition wall, it is necessary to provide a partition wall composed of a sealing material containing conductive particulates between the conductive layers provided on both the substrates. However, on the contrary, the first substrate and the second substrate are not electrically connected even if a partition wall composed of a sealing material containing conductive particulates is provided on a place other than the part on which conductive layers are provided on both the substrates.
That is, it is possible to manufacture both a partition wall which electrically connects the first substrate and the second substrate and a partition wall which dose not do so by using a partition wall composed of a sealing material containing conductive particulates and a partition wall composed of a sealing material containing no conductive materials, respectively. However, even when only a sealing material containing conductive particulates is used, both a partition wall which electrically connects the first substrate and the second substrate and a partition wall which does not electrically connect these substrates can be manufactured by using a part on a substrate on which a conductive layer is formed and a part on which a conductive layer is not formed, respectively.

Moreover, an arrangement method of the present invention can be used not only for a dye-sensitized solar cell module but for an organic solar cell (thin film laminated) module as described, for example, in JP 2006-332380 A.

### EXAMPLES

The present invention will be described further in detail below by way of Examples with reference to attached drawings, but the present invention is not limited to these Examples.

### Example 1

Three rows of thin films of FTO as a conductive substance were formed by a CVD method on a glass plate having a thickness of 1.1 mm as a first substrate as shown in Fig. 1, forming a first conductive layer. Subsequently, a paste of TiO₂ particulates (having a particle size of 20 nm) with terpineol (mass ratio of terpineol:TiO₂ particulates being 70:30) was applied onto the first conductive layer and fired for 30 minutes at 450°C to form a semiconductor-containing layer (having a film thickness of 15 µm and a minor-axis width of 5 mm) (Fig. 2). A silver paste Varniphite M-18 (trade name of a silver paste manufactured by Nippon Graphite Industries, Ltd.) was applied by screen printing to the semiconductor-containing layer and dried for 30 minutes at 120°C to form a third conductive layer (having a film thickness of 8 to 15 µm and some irregularities) (Fig. 3).

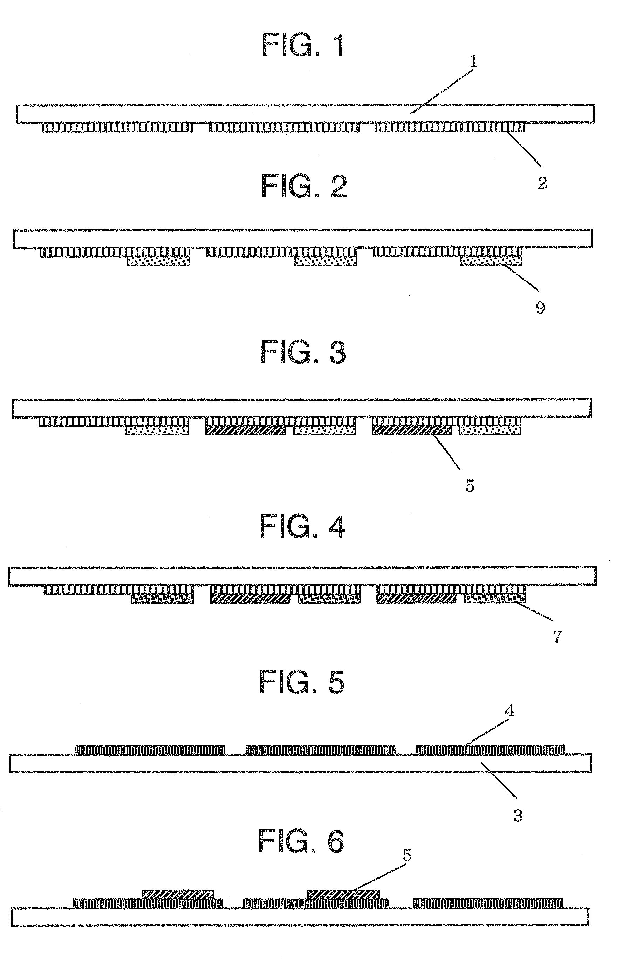

Next, the first substrate provided with the semiconductor-containing layer obtained as described above was immersed in a solution, the solution being obtained by dissolving a sensitizing dye represented by the following formula in a 1:1 mixed solvent of acetonitrile and t-butanol so that the concentration of the dye is 3.2 × 10⁻⁴ M, at room temperature (25°C) for 36 hours to allow the dye to be carried, washed with acetonitrile, and dried to obtain a first substrate in which a photoelectric conversion layer was provided on the first conductive layer (Fig. 4). Note that the minor-axis width of the extension part of the first conductive layer at this time was 1 mm, and the above-described value of L6/L5 was 5.

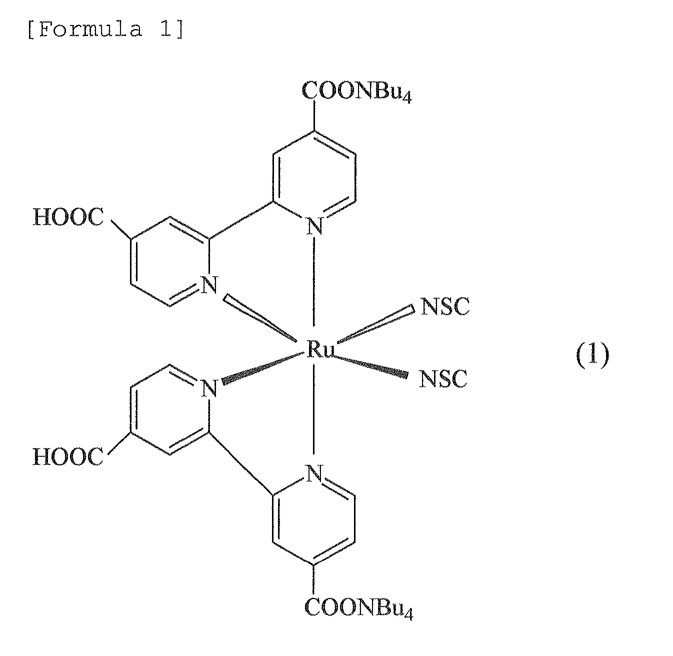

Thin films of FTO (having a film thickness of 1000 nm) were formed by a CVD method on a glass plate having a thickness of 1.1 mm as a second substrate. A second conductive layer was formed on the thin film of FTO by sputtering Pt into a thickness of 50 Å (Fig. 5). Subsequently, the above silver paste was applied by screen printing onto the second conductive layer and dried for 30 minutes at 120°C to form a third conductive layer (having a film thickness of 8 to 15 µm) (Fig. 6).

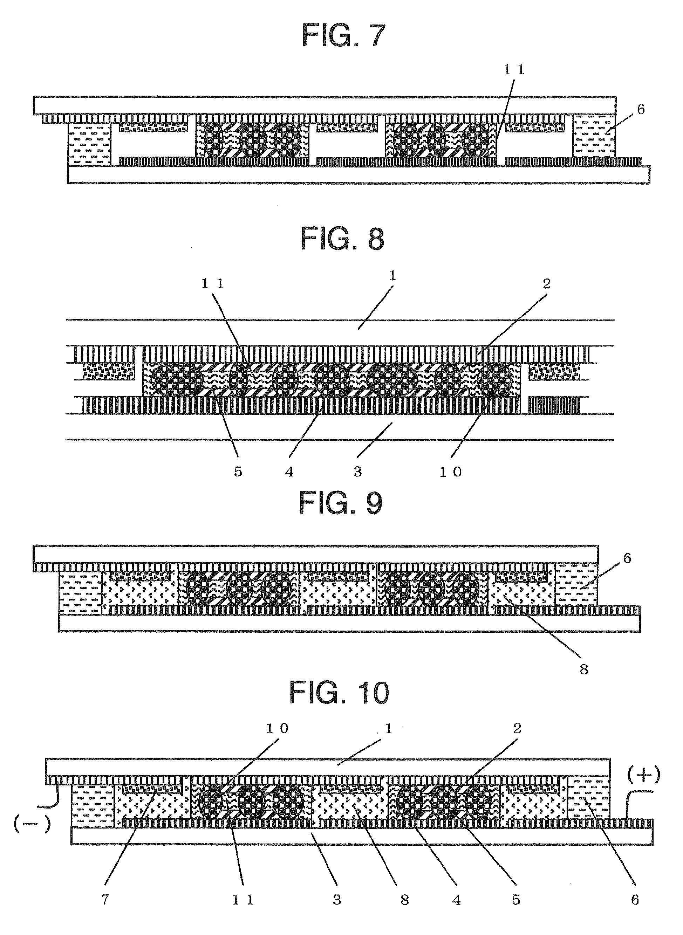

KAYATORON ML-3600P5E (trade name of an epoxy resin sealing material, manufactured by Nippon Kayaku Co., Ltd.) was mixed with Varniphite M-18 (trade name of a silver paste manufactured by Nippon Graphite Industries, Ltd., having an average particle size of 30 µm) in an amount of 5% by mass, and the resulting mixture was stirred to prepare a conductive particulate-containing sealing material for a partition wall. The conductive particulate-containing sealing material was applied by screen printing onto the second conductive layer and the third conductive layer on the second substrate. The resulting second substrate was then bonded to the first substrate with a pressure of 2.5 kgf/cm² and cured for 60 minutes at 120°C to thereby form a partition wall (1 mm in width). In addition, the periphery of both the substrates was adhered by the sealing material which did not contain conductive particulates (except an inlet for injecting a charge transfer layer) (Fig. 7). The images of the first conductive layers, the second conductive layers, the third conductive layers, the conductive particulates, and the partition walls after bonding are shown in Fig. 8. Note that Fig. 8 is a partially enlarged view to show the relation between the first conductive layers, the second conductive layers, the partition walls, the conductive particulates, and the third conductive layers. Note that the space between the first conductive layer and the second conductive layer after bonding was about 25 µm.

A solution containing an electrolyte (charge transfer layer) was injected from an inlet (not shown) into a cavity formed by the first substrate, the second substrate, and the partition walls and filled the cavity (Fig. 9). As the charge transfer layer, was used a solution prepared by dissolving iodine, lithium iodide, 1,2-dimethyl-3-n-propyl imidazolium iodide, and t-butyl pyridine in 3-methoxy propionitrile so that the concentration is 0.1 M, 0.1 M, 0.6 M, and 1 M, respectively. Subsequently, the inlet was sealed to obtain the dye-sensitized solar cell module (module A) of the present invention. The dye-sensitized solar cell module with three cells in series obtained in this way was provided with lead wires to manufacture a dye-sensitized solar battery (Fig. 10).

### Comparative Example 1

A dye-sensitized solar cell module for comparison (module B) was manufactured by the same method as in Example 1 except that a third conductive layer was not provided on a conductive layer.

### Example 2

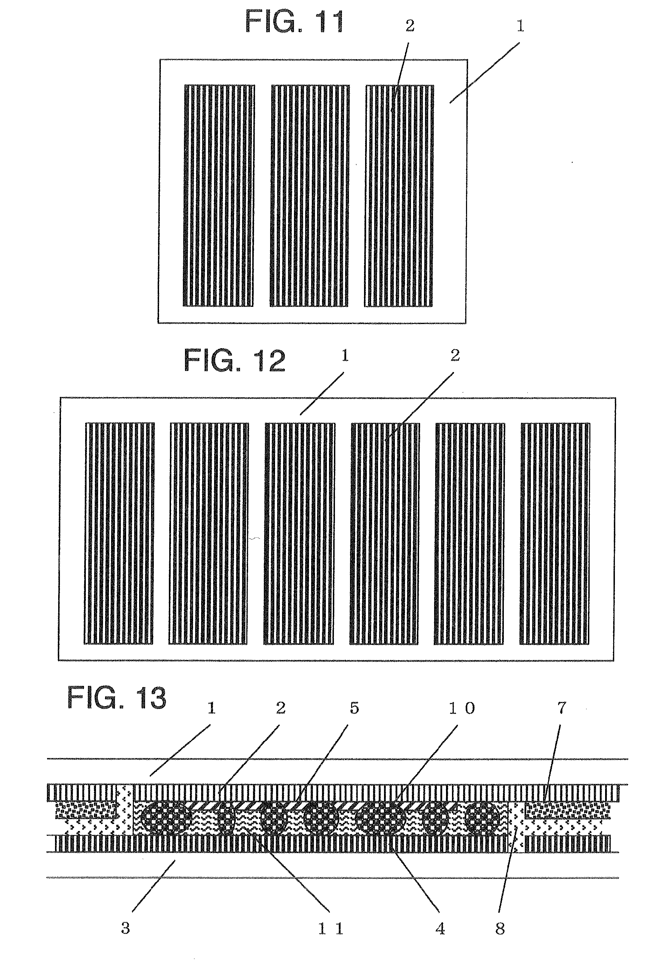

The dye-sensitized solar cell module of the present invention (module C) was manufactured in the same manner as in Example 1 except that cells were arranged in six rows in series (Fig. 12).

### Example 3

The dye-sensitized solar cell module of the present invention (module D) was manufactured in the same manner as in Example 2 except that the third conductive layer was provided only on the first substrate (Fig. 13).

### Example 4

The dye-sensitized solar cell module of the present invention (module E) was manufactured in the same manner as in Example 2 except that the third conductive layer was provided only on the second substrate.

### Comparative Example 2

A dye-sensitized solar cell module for comparison (module F) was manufactured in the same manner as in Example 2 except that a third conductive layer was provided on neither of the opposing conductive layers.

### Evaluation test

The performance as a solar battery of the dye-sensitized solar cell modules A to F obtained in Examples 1 to 4 and Comparative Examples 1 and 2 was tested under the conditions shown below. The results of the measurement are shown in Table 1.

### - Measurement conditions

The short-circuit current, open-circuit voltage, and conversion efficiency were measured under the following conditions: Light source: 500 W xenon lamp, 100 mW/cm² through an AM (air mass): 1.5 filter, a measuring-instrument: solar simulator WXS-155S-10 (AM1.5G) (manufactured by Wacom Electric Co., Ltd.).

[Table 1]

**Table 1 Performance evaluation of dye-sensitized solar cell modules**

| | Module | Number of cells | Short-circuit current (mA/cm2) | Open-voltage (V) | Conversion circuit efficiency (%) | Fill factor |
|---|---|---|---|---|---|---|
| Example 1 | A | 3 | 4.80 | 1.79 | 4.95 | 0.58 |
| Comparative Example 1 | B | 3 | 4.08 | 1.68 | 3.66 | 0.56 |
| Example 2 | C | 6 | 1.94 | 3.90 | 4.84 | 0.60 |
| Example 3 | D | 6 | 1.92 | 3.88 | 4.58 | 0.61 |
| Example 4 | E | 6 | 1.87 | 3.88 | 4.59 | 0.62 |
| Comparative Example 2 | F | 6 | 1.86 | 3.83 | 4.21 | 0.58 |

The comparison of Example 1 with Comparative Example 1 in Table 1 indicated that the short-circuit current, the open-circuit voltage, the conversion efficiency, and the fill factor in Example 1 were higher by a maximum of 18%, 6%, 35%, and 3%, respectively, than those in Comparative Example 1. Thus, it was found that the performance as a solar battery of the dye-sensitized solar cell module of the present invention provided with a third conductive layer was excellent. Further, the comparison of Examples 2 to 4 with Comparative Example 2 in Table 1 suggested that performance as a solar battery in Examples 2 to 4 of the present invention, in which the third conductive layer was provided on the extension part of either both or one of the first conductive layer and the second conductive layer, has been improved, in terms of the improvement in the short-circuit current, the open-circuit voltage, the conversion efficiency, and the fill factor, as compared with Comparative Example 2, in which the third conductive layer was not provided on the extension part of the first conductive layer and the second conductive layer. Particularly, an improvement of from about 3% to 7% was observed in the fill factor representing the battery resistance inside a solar battery, and an improvement of from about 9% to 15% was observed in the conversion efficiency.

### BRIEF DESCRIPTION OF THE DRAWINGS

Figs. 1 to 13 are schematic views each schematically showing each flowchart for the manufacture of a dye-sensitized solar cell module of the present invention, a dye-sensitized solar cell module of the present invention, and a solar battery using the dye-sensitized solar cell module.
Fig. 1 shows a flowchart for manufacturing a first conductive layer on a first substrate;
Fig. 2 shows a flowchart for manufacturing a semiconductor-containing layer on a first conductive layer;
Fig. 3 shows a flowchart for manufacturing a third conductive layer on a first conductive layer;
Fig. 4 shows a flowchart for adsorbing a dye on a semiconductor-containing layer to manufacture a photoelectric conversion layer;
Fig. 5 shows a flowchart for manufacturing a second conductive layer on a second substrate;
Fig. 6 shows a flowchart for manufacturing a third conductive layer on a second conductive layer;
Fig. 7 shows a flowchart for bonding a first substrate and a second substrate and manufacturing a partition wall;
Fig. 8 is a view showing the relation of a first substrate, a second substrate, a first conductive layer, a second conductive layer, and a third conductive layer and conductive particulates in a partition wall on the periphery of the partition wall;
Fig. 9 shows a flowchart for manufacturing a charge transfer layer in a cavity surrounded by a first conductive layer, a second conductive layer, and a partition wall;
Fig. 10 shows a device using the dye-sensitized solar cell module of the present invention as a solar battery;
Fig. 11 shows a view of the first substrate in Fig. 1, in which a first conductive layer is provided, seen from the top in the longitudinal direction (in the case where the number of cells is three);
Fig. 12 shows a view of the first substrate, in which a first conductive layer is provided, seen from the top in the longitudinal direction (in the case where the number of cells is six); and
Fig. 13 shows a view in which a third conductive layer is manufactured only on a first conductive layer.

### DESCRIPTION OF REFERENCE NUMERALS

- 1: First substrate
- 2: First conductive layer
- 3: Second substrate
- 4: Second conductive layer
- 5: Third conductive layer
- 6: Partition wall (containing no conductive particulates)
- 7: Photoelectric conversion layer
- 8: Charge transfer layer
- 9: Semiconductor-containing layer
- 10: Conductive particulate
- 11: Partition wall (containing conductive particulates)

### INDUSTRIAL APPLICABILITY

A solar call module of the present invention is effectively used for a solar battery.

## Claims

1. A dye-sensitized solar cell module in which a plurality of dye-sensitized solar cells is two-dimensionally arranged, each of the dye-sensitized solar cells comprising: a first substrate provided with a first conductive layer consisting of a photoelectric conversion layer-installing part and an extension part, a photoelectric conversion layer provided on the photoelectric conversion layer-installing part on the first conductive layer, a second substrate as a counter electrode provided with a second conductive layer consisting of a charge transfer layer contact part and an extension part, a third conductive layer provided on the extension part of the first conductive layer and/or the second conductive layer, a partition wall to partition adjacent dye-sensitized solar cells, and a charge transfer layer,
wherein some or all of the partition walls are a partition wall containing conductive particulates each having a conductive layer on a surface thereof, and the conductive layer of the conductive particulates is electrically connected in series with the extension part of the first conductive layer of a dye-sensitized solar cell and the extension part of the second conductive layer of an adjacent dye-sensitized solar cell via the third conductive layer provided on the extension part of the first conductive layer and/or on the extension part of the second conductive layer.

2. The dye-sensitized solar cell module according to claim 1, wherein the third conductive layer is provided only on the extension part of the first conductive layer.

3. The dye-sensitized solar cell module according to claim 1, wherein the third conductive layer is provided only on the extension part of the second conductive layer.

4. The dye-sensitized solar cell module according to claim 1, wherein the third conductive layer is provided on both the extension parts of the first conductive layer and the second conductive layer.

5. The dye-sensitized solar cell module according to any one of claims 1 to 4, wherein the third conductive layer is a metal layer or a metal containing layer having smaller electric resistance than the first conductive layer and the second conductive layer.

6. The dye-sensitized solar cell module according to any one of claims 1 to 5, wherein the conductive particulates in the partition wall are each a spherical resin particulate which is deformable with pressure applied to the first substrate and the second substrate when these substrates are bonded together and has a conductive metal plated on a surface thereof.

7. The dye-sensitized solar cell module according to any one of claims 1 to 6, wherein the third conductive layer is a metal layer or a metal containing layer which is softer than the conductive particulates in the partition wall.

8. The dye-sensitized solar cell module according to any one of claims 1 to 7, wherein a material for providing a partition wall (seating material) is an adhesive resin in which the conductive particulates are dispersed.

9. The dye-sensitized solar cell module according to any one of claims 1 to 8, wherein space distance L₀ between the first conductive layer and the Second conductive layer is from 5 to 200 µm.
